# EUROPEAN PATENT APPLICATION

(11) **EP 4 807 974 A1**
(43) Date of publication of application: **16.09.2026**
(21) Application number: 23958275.2
(22) Date of filing: 08.11.2023
(51) Int. Cl.: H02M 7/49

(54) **POWER CONVERSION DEVICE**

(71) Applicant: Mitsubishi Electric Corporation, Tokyo 100-8310 (JP)
(72) Inventor: YAMANAKA, Daisuke, Tokyo 100-8310 (JP); KONO, Yoshiyuki, Tokyo 100-8310 (JP)
(74) Representative: Witte, Weller & Partner Patentanwälte mbB
(86) International application number: PCT/JP2023/040265
(87) International publication number: WO 2025/099873

(57) **Abstract**

A power conversion device (1) includes: a power converter (2) including a plurality of converter cells (7) connected in series; and a control device (3) to control the power converter (2). Each of the plurality of converter cells (7) includes a cell controller (35), a first input/output terminal (G1) and a second input/output terminal (G2), a plurality of switching elements (31s, 32s), and an energy storage element (27). When the cell controller (35) detects an overcurrent flowing to any of the plurality of switching elements (31s, 32s), the cell controller (35) gate-blocks the plurality of switching elements (31s, 32s), and transmits detection information indicating detection of the overcurrent to the control device (3). When the control device (3) receives the detection information, the control device (3) instructs each of the plurality of converter cells (7) to gate-block the plurality of switching elements (31s, 32s) of the converter cell (7).

## Description

### TECHNICAL FIELD

The present disclosure relates to a power conversion device.

### BACKGROUND ART

In recent years, a modular multilevel converter (MMC) has been known as a high-voltage and large-capacity power conversion device applied to a high-voltage system such as a power system. The MMC is constituted by arms including cascade-connected converter cells. Each converter cell includes a plurality of switching elements and an energy storage element (for example, a capacitor), and outputs a voltage across the capacitor or a zero voltage by turning on/off the switching elements.

For example, WO2018/092303 (PTL 1) discloses a power conversion device including: a power conversion circuit unit including a plurality of converter cells; a control device; and a protection device. The control device generates a control command for performing operation control of each converter cell. The protection device generates a protection command for instructing whether to operate each converter cell based on the control command, or to stop operation of each converter cell irrespective of the control command.

### CITATION LIST

### PATENT LITERATURE

PTL 1: WO2018/092303

### SUMMARY OF INVENTION

### TECHNICAL PROBLEM

In an MMC, when it is detected that an overcurrent flows to any arm due to a fault of a power system or the like, it is necessary to turn off switching elements of each converter cell in order to prevent a circuit failure. In PTL 1, when the protection device, which is a higher-level device of each converter cell, detects that at least one of an arm current, a DC current, and a circulating current is an overcurrent, the protection device outputs a stop command for stopping operation of each converter cell.

Since the higher-level device collects various kinds of information and performs overcurrent detection, it has an advantage that detection accuracy thereof is high. However, since time is required to collect information, there is a possibility that a command from the higher-level device to each converter cell may be delayed, and as a result, a protection operation may be delayed. On the other hand, when the overcurrent detection and the protection operation are performed by an individual controller provided in each converter cell, high-speed protection is possible, but detection accuracy thereof is low, because determination on the overcurrent detection is performed based on local information. Therefore, there is a need to appropriately protect each converter cell while achieving coordination between the higher-level device and the controller of each converter cell.

An object in an aspect of the present disclosure is to provide a power conversion device capable of appropriately protecting each converter cell by achieving coordination between a higher-level device and an individual controller of each converter cell.

### SOLUTION TO PROBLEM

A power conversion device according to an embodiment includes: a power converter including a plurality of converter cells connected in series; and a control device to control the power converter. Each of the plurality of converter cells includes a cell controller, a first input/output terminal and a second input/output terminal, a plurality of switching elements, and an energy storage element connected to the first input/output terminal and the second input/output terminal via the plurality of switching elements. When the cell controller detects an overcurrent flowing to any of the plurality of switching elements, the cell controller gate-blocks the plurality of switching elements, and transmits detection information indicating detection of the overcurrent to the control device. When the control device receives the detection information, the control device instructs each of the plurality of converter cells to gate-block the plurality of switching elements of the converter cell.

A power conversion device according to another embodiment includes: a power converter including a plurality of converter cells connected in series; and a control device to control the power converter. Each of the plurality of converter cells includes a cell controller, a first switching circuit and a second switching circuit connected in series, and a first input/output terminal and a second input/output terminal. The first switching circuit includes a first switching element, a second switching element, and a first energy storage element connected in parallel with a series body including the first switching element and the second switching element. The first input/output terminal is connected to a connection point between a negative electrode terminal of the first switching element and a positive electrode terminal of the second switching element. The second switching circuit includes a third switching element, a fourth switching element, and a second energy storage element connected in parallel with a series body including the third switching element and the fourth switching element. The second input/output terminal is connected to a connection point between a negative electrode terminal of the third switching element and a positive electrode terminal of the fourth switching element. When the cell controller detects an overcurrent flowing to any of the first switching element and the fourth switching element, the cell controller gate-blocks the first to fourth switching elements, and transmits detection information indicating detection of the overcurrent to the control device. When the control device receives the detection information, the control device instructs each of the plurality of converter cells to gate-block the first to fourth switching elements of the converter cell.

### ADVANTAGEOUS EFFECTS OF INVENTION

With the power conversion device according to the present disclosure, each converter cell can be appropriately protected by achieving coordination between a higher-level device and an individual controller of each converter cell.

### BRIEF DESCRIPTION OF DRAWINGS

Fig. 1 is a schematic configuration diagram of a power conversion device according to the present embodiment.
Fig. 2 is a diagram showing a configuration of a converter cell according to the present embodiment.
Fig. 3 is a block diagram showing an example of a hardware configuration of a control device according to the present embodiment.
Fig. 4 is a flowchart showing an example of a processing procedure of the converter cell according to the present embodiment.
Fig. 5 is a flowchart showing an example of a processing procedure of the control device according to the present embodiment.
Fig. 6 is a diagram showing a converter cell according to a modification of the present embodiment.
Fig. 7 is a flowchart showing an example of a processing procedure of a control device according to the modification of the present embodiment.

### DESCRIPTION OF EMBODIMENTS

Hereinafter, the present embodiment will be described with reference to the drawings. In the description below, identical parts will be designated by the same reference numerals. Since their names and functions are also the same, detailed description thereof will not be repeated.

### <Configuration of Power Conversion Device>

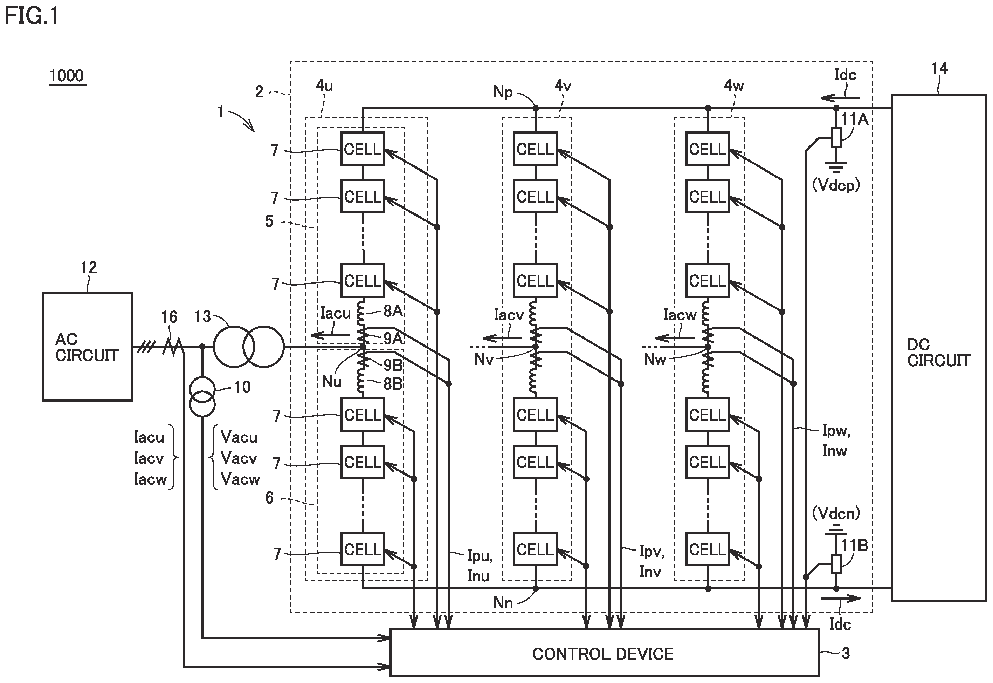

Fig. 1 is a schematic configuration diagram of a power conversion device according to the present embodiment. Referring to Fig. 1, a power conversion system 1000 includes a power conversion device 1, an alternating current (AC) circuit 12, an interconnection transformer 13, and a direct current (DC) circuit 14. Typically, power conversion device 1 and interconnection transformer 13 are provided in a substation. Power conversion device 1 includes a power converter 2 including a plurality of converter cells (corresponding to "cells" in Fig. 1) 7 connected in series with each other, and a control device 3 to control power converter 2. A "converter cell" is also referred to as a "sub module" or a "unit converter". Power conversion device 1 performs power conversion between DC circuit 14 and AC circuit 12. In the present embodiment, it is assumed that a power system includes AC circuit 12, the substation including power conversion device 1 and the like, and DC circuit 14.

Power converter 2 includes a plurality of leg circuits 4u, 4v, and 4w (hereinafter described as a "leg circuit 4" when they are collectively referred to or any one of them is referred to) connected in parallel with each other between a positive electrode DC terminal (that is, a high potential-side DC terminal) Np and a negative electrode DC terminal (that is, a low potential-side DC terminal) Nn.

Leg circuit 4 is provided for each of a plurality of phases constituting an alternating current. Leg circuit 4 is connected between AC circuit 12 and DC circuit 14, and performs power conversion between the both circuits. Fig. 1 shows a case where AC circuit 12 is a three-phase AC system, and three leg circuits 4u, 4v, and 4w are provided corresponding to a U phase, a V phase, and a W phase, respectively.

AC input terminals Nu, Nv, and Nw provided to leg circuits 4u, 4v, and 4w, respectively, are connected to AC circuit 12 via interconnection transformer 13. AC circuit 12 is, for example, an AC power system including an AC power source and the like. In Fig. 1, for ease of illustration, connection between AC input terminal Nv, Nw and interconnection transformer 13 is not shown.

High potential-side DC terminal Np and low potential-side DC terminal Nn connected in common to leg circuits 4 are connected to DC circuit 14. DC circuit 14 is, for example, a DC terminal of a DC power system including a DC power transmission grid and the like, or of another power conversion device. In the latter case, two power conversion devices are coupled to constitute a Back To Back (BTB) system for connecting AC power systems having different rated frequencies, synchronizations, or the like.

The leg circuits may be configured to be connected to AC circuit 12 via an interconnection reactor, instead of using interconnection transformer 13 in Fig. 1. Furthermore, leg circuits 4u, 4v, and 4w may be respectively provided with primary windings instead of AC input terminals Nu, Nv, and Nw, and leg circuits 4u, 4v, and 4w may be AC-connected to interconnection transformer 13 or the interconnection reactor via secondary windings magnetically coupled to the primary windings. In this case, the primary windings may be reactors 8A and 8B described below. That is, leg circuits 4 are electrically (that is, DC- or AC-) connected with AC circuit 12 via connection portions provided to leg circuits 4u, 4v, and 4w, such as AC input terminals Nu, Nv, and Nw or the primary windings described above.

Leg circuit 4u includes an upper arm 5 extending from high potential-side DC terminal Np to AC input terminal Nu, and a lower arm 6 extending from low potential-side DC terminal Nn to AC input terminal Nu. AC input terminal Nu, which is a connection point between upper arm 5 and lower arm 6, is connected with interconnection transformer 13. High potential-side DC terminal Np and low potential-side DC terminal Nn are connected to DC circuit 14. Since leg circuits 4v and 4w also have the same configuration, leg circuit 4u will be described below as a representative.

Upper arm 5 includes a plurality of cascade-connected converter cells 7, and reactor 8A. The plurality of converter cells 7 and reactor 8A are connected in series with each other. Lower arm 6 includes a plurality of cascade-connected converter cells 7, and reactor 8B. The plurality of converter cells 7 and reactor 8B are connected in series with each other.

Reactor 8A may be inserted at any position in upper arm 5 of leg circuit 4u, and reactor 8B may be inserted at any position in lower arm 6 of leg circuit 4u. A plurality of reactors 8A and a plurality of reactors 8B may be provided. The reactors may have inductance values different from each other. Furthermore, only reactor 8A in upper arm 5 or only reactor 8B in lower arm 6 may be provided.

Power conversion device 1 includes an AC voltage detector 10, an AC current detector 16, DC voltage detectors 11A and 11B, and arm current detectors 9A and 9B provided to each leg circuit 4. These detectors each measure an electrical quantity (that is, a current or a voltage) used to control power conversion device 1. Detection information detected by these detectors is inputted to control device 3.

Control device 3 corresponds to a higher-level device of each converter cell 7, and outputs an operation command for controlling an operation state of each converter cell 7 based on the detection information. Control device 3 receives, from each converter cell 7, a signal indicating a detection value of a voltage of a capacitor provided to converter cell 7.

Control device 3 may be constituted by a dedicated circuit, or may be partially or entirely constituted by a field programmable gate array (FPGA), an application specific integrated circuit (ASIC), a microprocessor, or the like. It should be noted that control device 3 may be constituted by a digital protection relay device, for example.

AC voltage detector 10 detects a U-phase AC voltage Vacu, a V-phase AC voltage Vacv, and a W-phase AC voltage Vacw (hereinafter also collectively referred to as an "AC voltage Vac") of AC circuit 12. AC current detector 16 detects a U-phase AC current Iacu, a V-phase AC current Iacv, and a W-phase AC current Iacw (hereinafter also collectively referred to as an "AC current Iac") of AC circuit 12. DC voltage detector 11A detects a DC voltage value Vdcp of high potential-side DC terminal Np connected to DC circuit 14. DC voltage detector 11B detects a DC voltage value Vdcn of low potential-side DC terminal Nn connected to DC circuit 14.

A DC voltage Vdc of DC circuit 14 is a DC voltage between high potential-side DC terminal Np and low potential-side DC terminal Nn, and is obtained from DC voltage values Vdcp and Vdcn detected by DC voltage detectors 11A and 11B. Specifically, DC voltage Vdc is obtained as "Vdc = Vdcp-Vdcn".

Arm current detectors 9A and 9B provided to leg circuit 4u for the U phase detect an arm current Ipu flowing to upper arm 5 and an arm current Inu flowing to lower arm 6, respectively. Arm current detectors 9A and 9B provided to leg circuit 4v for the V phase detect an arm current Ipv and an arm current Inv, respectively. Arm current detectors 9A and 9B provided to leg circuit 4w for the W phase detect an arm current Ipw and an arm current Inw, respectively. Hereinafter, arm currents Ipu to Inw are also collectively referred to as an "arm current Iarm".

A DC current Idc outputted from power converter 2 is detected using a DC current detector (not shown). It should be noted that DC current Idc may be computed using arm currents Ipu to Inw. Further, a circulating current that does not flow to DC circuit 14 but flows between legs for each phase is computed using arm currents Ipu to Inw for the respective phases and DC current Idc. For example, a U-phase circulating current Izu is computed as "Izu = (Ipu+Inu)/2-Idc/3", a V-phase circulating current Izv is computed as "Izv = (Ipv+Inv)/2-Idc/3", and a W-phase circulating current Izw is computed as "Izw = (Ipw-Inw)/2-Idc/3". Hereinafter, circulating currents Izu to Izw are also collectively referred to as a "circulating current Iz".

### <Configuration of Converter Cell>

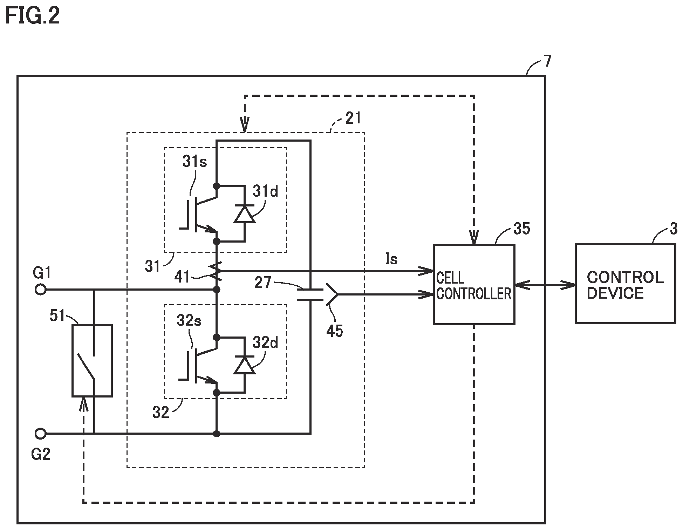

Fig. 2 is a diagram showing a configuration of the converter cell according to the present embodiment. Referring to Fig. 2, converter cell 7 includes a half-bridge type switching circuit 21, a cell controller 35, a bypass element 51, and input/output terminals G1 and G2. Switching circuit 21 includes a capacitor 27 and semiconductor circuits 31 and 32.

Semiconductor circuit 31 includes a switching element 31s and a diode 31d. Diode 31d is a freewheel diode (hereinafter also referred to as an "FWD") connected in anti-parallel (that is, in parallel and in a reverse bias direction) with switching element 31s. Semiconductor circuit 32 includes a switching element 32s and a diode 32d. Diode 32d is an FWD connected in anti-parallel with switching element 32s.

Switching elements 31s and 32s are each constituted, for example, by a self-turn-off semiconductor switching element such as an insulated gate bipolar transistor (IGBT) or a metal oxide semiconductor field-effect transistor (MOSFET).

Capacitor 27 as an energy storage element is connected to input/output terminals G1 and G2 via a plurality of switching elements 31s and 32s. Specifically, capacitor 27 is connected in parallel with a series body including semiconductor circuit 31 (for example, switching element 31s) and semiconductor circuit 32 (for example, switching element 32s) connected in series, and holds a DC voltage. In detail, a connection node between switching element 31s and switching element 32s is connected with input/output terminal G1 on a high potential side. A connection node between switching element 32s and capacitor 27 is connected with input/output terminal G2 on a low potential side. Further, a positive electrode of capacitor 27 is connected with a positive electrode of switching element 31s, and a negative electrode of capacitor 27 is connected with a negative electrode of switching element 32s.

Bypass element 51 is connected between input/output terminal G1 and input/output terminal G2. In the example in Fig. 2, bypass element 51 is connected in parallel with semiconductor circuit 32. By turning on bypass element 51, converter cell 7 is short-circuited. Bypass element 51 is a switch that is also utilized to short-circuit converter cell 7 when each element (for example, semiconductor circuit 31, 32, or the like) of converter cell 7 fails. Thereby, even when any converter cell 7 among the plurality of converter cells 7 fails, operation of power converter 2 can be continued by utilizing other converter cells 7.

A current detector 41 is provided between semiconductor circuit 31 and input/output terminal G1 to detect a current Is flowing to semiconductor circuit 31 (for example, switching element 31s). Current detector 41 is constituted, for example, by a shunt resistor or the like. Detected current Is is inputted to cell controller 35. It should be noted that current detector 41 may be provided between semiconductor circuit 32 and input/output terminal G2.

Although the example in Fig. 2 describes a configuration in which input/output terminal G1 on the high potential side is connected to the connection node between switching elements 31s and 32s, and input/output terminal G2 on the low potential side is connected to the connection node between switching element 32s and capacitor 27, the present disclosure is not limited to such a configuration. For example, input/output terminal G1 may be connected to a connection node between switching element 31s and capacitor 27, and input/output terminal G2 may be connected to the connection node between switching elements 31s and 32s. In this case, bypass element 51 is connected in parallel with semiconductor circuit 31.

A voltage detection unit 45 detects a voltage across capacitor 27 (hereinafter also referred to as a "capacitor voltage"). The detected capacitor voltage is inputted to cell controller 35. Cell controller 35 transmits and receives various kinds of information to and from control device 3.

Cell controller 35 controls operation of switching elements 31s and 32s. During a normal operation (for example, in the case of outputting a zero voltage or a positive voltage to between input/output terminals G1 and G2), cell controller 35 controls switching elements 31s and 32s to be in an ON state or an OFF state to output the zero voltage or the positive voltage to between input/output terminals G1 and G2. Cell controller 35 is constituted, for example, by an ASIC, an FPGA, a combination thereof, or the like.

Converter cell 7 can output the zero voltage or the positive voltage dependent on the voltage of capacitor 27, by alternately setting switching elements 31s and 32s to the ON state. Diodes 31d and 32d are provided for protection when a reverse voltage is applied to switching elements 31s and 32s, respectively.

Cell controller 35 detects an overcurrent based on current Is received from current detector 41. Typically, when current Is is more than or equal to a threshold value K1, cell controller 35 detects an overcurrent flowing to semiconductor circuit 31 (for example, switching element 31s) or semiconductor circuit 32 (for example, switching element 32s). When cell controller 35 detects the overcurrent, cell controller 35 gate-blocks switching elements 31s and 32s (for example, fixes switching elements 31s and 32s to the OFF state). In this case, cell controller 35 transmits detection information indicating detection of the overcurrent (hereinafter also referred to as "overcurrent detection information") to control device 3.

When control device 3 receives the overcurrent detection information, control device 3 instructs (for example, transmits instruction information to) each of all converter cells 7 included in power converter 2 to gate-block switching elements 31s and 32s of converter cell 7. Cell controller 35 of each converter cell 7 gate-blocks switching elements 31s and 32s in accordance with the instruction. Details of subsequent processing of each of control device 3 and cell controller 35 will be described later.

Cell controller 35 may have a self-diagnosis function of diagnosing a failure of converter cell 7. For example, the failure of converter cell 7 includes a failure of a switching element, a failure of a gate driver, a failure of a capacitor, a communication error, and the like. Cell controller 35 transmits failure information indicating the failure to control device 3.

### <Hardware Configuration of Control Device>

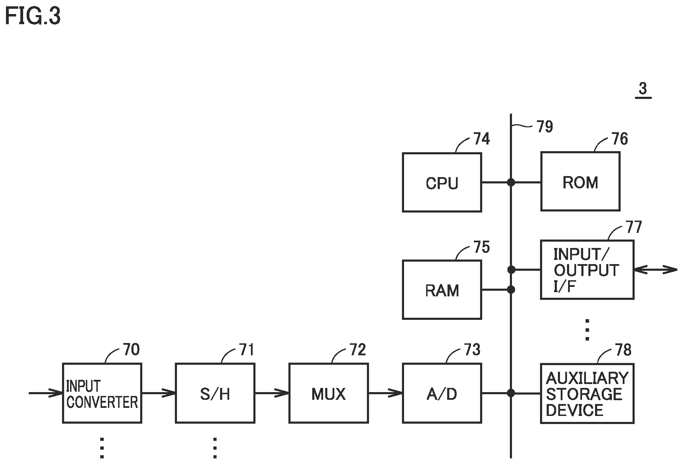

Fig. 3 is a block diagram showing an example of a hardware configuration of the control device according to the present embodiment. Control device 3 in the case of Fig. 3 is constituted based on a computer. Referring to Fig. 3, control device 3 includes one or more input converters 70, one or more sample hold circuits 71 (corresponding to "S/H" in the drawing), a multiplexer (MUX) 72, and an A/D converter 73. Furthermore, control device 3 includes one or more central processing units (CPUs) 74, a random access memory (RAM) 75, and a read only memory (ROM) 76. Furthermore, control device 3 includes one or more input/output interfaces 77, an auxiliary storage device 78, and a bus 79 that mutually connects the components described above.

Input converter 70 includes an auxiliary transformer for each input channel. Each auxiliary transformer converts the detection information detected by each of the detectors for various electrical quantities shown in Fig. 1 into a signal having a voltage level suitable for subsequent signal processing.

Sample hold circuit 71 is provided for each input converter 70. Sample hold circuit 71 samples a signal indicating an electrical quantity received from corresponding input converter 70 using a prescribed sampling frequency, and holds the signal.

Multiplexer 72 sequentially selects the signals held in a plurality of sample hold circuits 71. A/D converter 73 converts a signal selected by multiplexer 72 into a digital value. It should be noted that A/D conversion may be performed in parallel on detection information of a plurality of input channels, by providing a plurality of A/D converters 73.

CPU 74 controls entire control device 3, and performs computation processing in accordance with a program. RAM 75 as a volatile memory and ROM 76 as a nonvolatile memory are used as main storages for CPU 74. ROM 76 stores programs, set values for signal processing, and the like. Auxiliary storage device 78 is a nonvolatile memory having a capacity larger than that of ROM 76, and stores programs, data of electrical quantity detection values, and the like.

Input/output interface 77 is an interface circuit in communicating between CPU 74 and an external device.

At least a part of control device 3 may be constituted using a circuit such as an FPGA and an ASIC. Alternatively, at least a part of control device 3 can also be constituted by an analog circuit.

### <Coordinated Operation of Control Device and Cell Controller>

When control device 3 as a higher-level device determines that an overcurrent occurs in power converter 2 using detected arm current Iarm, DC current Idc, circulating current Iz, and the like, control device 3 can suppress the overcurrent by gate-blocking each converter cell 7 (for example, fixing the switching elements to the OFF state). Since control device 3 performs the determination using various kinds of information, determination accuracy thereof is high. However, due to such reasons that a certain time is required for the determination and a command to each converter cell 7 is required after the determination, there is a possibility that protection of power converter 2 may be delayed. Further, when a short circuit occurs in converter cell 7, it may not be possible to detect an overcurrent using arm current Iarm.

On the other hand, when current measurement, determination of whether or not an overcurrent occurs, and a protection operation (for example, gate-blocking) are performed in converter cell 7, the measurement, the determination, and the protection are completed in one converter cell 7, and thus a series of these processings can be performed at a high speed. However, since the determination is performed based on only local information, determination accuracy thereof is lower than the determination accuracy of control device 3.

Here, a short circuit in capacitor 27 due to short-circuit conduction in converter cell 7 or the like is a high-speed phenomenon, and thus, in this case, protection of converter cell 7 is not performed in time unless converter cell 7 itself performs detection of an overcurrent and the protection operation. Further, the same applies to the case of a short circuit without involving an inductance, such as a short circuit between valve platform levels.

On the other hand, when an overcurrent occurs due to a system fault, a current change and a current peak thereof are smaller than those in the above phenomenon, and thus protection by control device 3 can be performed in time. It should be noted that, in this case, a disturbance caused when the system fault occurs makes noise, and thus the determination accuracy by converter cell 7 becomes lower.

Therefore, in order to appropriately perform protection of power converter 2, it is necessary to appropriately combine a protection operation through control device 3 and the protection operation in converter cell 7 (that is, cell controller 35). In the following, processing procedures of cell controller 35 and control device 3 will be specifically described.

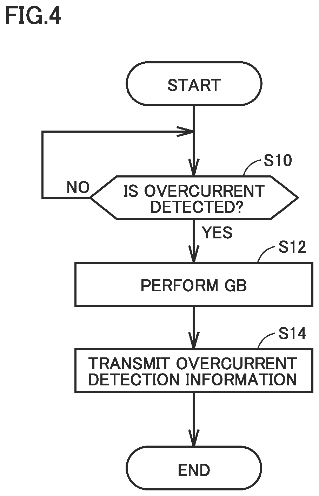

Fig. 4 is a flowchart showing an example of a processing procedure of the converter cell. In Fig. 4, processing of converter cell 7 is performed by cell controller 35.

Referring to Fig. 4, cell controller 35 determines whether or not it detects an overcurrent flowing to any of the plurality of switching elements 31s and 32s in converter cell 7 (step S10). Specifically, when current Is is more than or equal to threshold value K1, cell controller 35 detects an overcurrent. When an overcurrent is not detected (NO in step S10), cell controller 35 continues the processing in step S10. When an overcurrent is detected (YES in step S10), cell controller 35 gate-blocks switching elements 31s and 32s in converter cell 7 (step S12), and transmits the overcurrent detection information to control device 3 (step S14).

The flowchart described above has described a flow from when cell controller 35 detects an overcurrent to when it transmits the overcurrent detection information. Cell controller 35 performs various processings in accordance with an instruction from control device 3. For example, cell controller 35 sets switching elements 31s and 32s in a gate-blocked state to a deblocked state (for example, a state in which switching elements 31s and 32s can be turned on/off), based on a deblocking command from control device 3. Further, cell controller 35 sets bypass element 51 to an ON state (that is, a closed state), based on a closing command for bypass element 51 from control device 3.

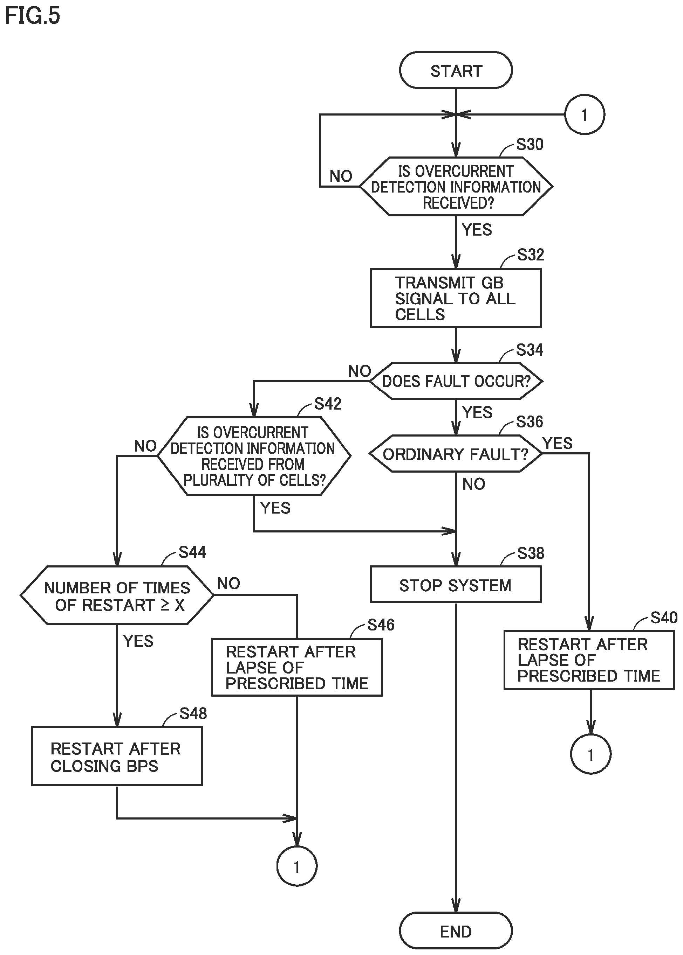

Fig. 5 is a flowchart showing an example of the processing procedure of the control device. Processing of control device 3 in Fig. 5 is performed by processing circuitry in control device 3. The processing circuitry may be dedicated hardware, or may be CPU 74 that executes a program stored in an internal memory (for example, RAM 75, ROM 76, auxiliary storage device 78) of control device 3. When the processing circuitry is dedicated hardware, the processing circuitry is constituted, for example, by an FPGA, an ASIC, a combination thereof, or the like.

Referring to Fig. 5, control device 3 determines whether or not it receives the overcurrent detection information from at least one converter cell 7 (step S30). When control device 3 does not receive the overcurrent detection information from any of converter cells 7 (NO in step S30), control device 3 continues the processing in step S30. When control device 3 receives the overcurrent detection information from at least one converter cell 7 (YES in step S30), control device 3 transmits, to all converter cells 7 in power converter 2, a gate block signal for instructing them to gate-block switching elements 31s and 32s (step S32).

Control device 3 determines whether or not a fault occurs in a power system (for example, AC circuit 12, the substation, DC circuit 14) (step S34). Specifically, control device 3 determines whether or not the fault occurs by a known method, using AC voltage Vac, AC current Iac, and the like.

When the fault occurs (YES in step S34), control device 3 determines whether or not the fault is an ordinary fault (step S36). The ordinary fault includes a frequent failure on a power system side (for example, a temporary power transmission failure due to a lightning strike). Specifically, the ordinary fault is, for example, a fault in which a ground fault and a short circuit due to a lightning strike on a power transmission line, a power transmission tower, or the like are detected by a protection relay device of a system-side substation, protection of the power transmission line succeeds by current blocking by a breaker (not shown) provided between AC circuit 12 and the substation, and a voltage is restored in about four cycles. Since there is no damage to a facility when an ordinary fault occurs, power converter 2 can be restarted and operation thereof can be continued when an arc due to a lightning strike disappears.

For example, control device 3 determines that a system fault occurs, by detecting a voltage drop (for example, AC voltage Vac becoming less than or equal to a voltage value Vk) and a current increase (for example, AC current Iac becoming more than or equal to a current value Ik) at a system connection point (for example, on a primary side of interconnection transformer 13), and detecting that a fault point is on the system side based on a voltage phase and a current phase. Furthermore, when the voltage and the current are each restored to a normal range within an assumed time after detection of the system fault, control device 3 determines that the system fault is a temporary fault (that is, an ordinary fault).

On the other hand, when the fault is a serious fault which is not an ordinary fault, the operation of power converter 2 cannot be continued by opening and reclosing the breaker. The serious fault includes, for example, a ground fault or a short circuit fault in a substation. The ground fault or the short circuit fault on a secondary side of interconnection transformer 13 in the substation is caused by a factor other than a lightning strike, and there is a possibility that the fault may spread. Accordingly, it is necessary to stop and investigate the entire power conversion system including power conversion device 1. Control device 3 determines that a fault in the substation (that is, a serious fault) occurs, based on electrical quantities (for example, a current value and a voltage value) and phases on the secondary side of interconnection transformer 13 and in a DC line (for example, DC circuit 14), and a difference between a plurality of measured values of each electrical quantity.

When the fault in the power system is not an ordinary fault (that is, is a serious fault) (NO in step S36), control device 3 performs system stop processing (step S38), and ends processing. Specifically, the system stop processing includes processing for gate-blocking switching elements 31s and 32s of all converter cells 7 in power converter 2, processing for opening the breaker, and prescribed stop processing for completely stopping the operation of power converter 2. As described above, when a serious fault occurs, the operation of power converter 2 should not be continued and detailed investigation is necessary, and thus the system stop processing is performed.

When the fault in the power system is an ordinary fault (YES in step S36), control device 3 performs restart processing for restarting power converter 2 after a lapse of a prescribed time from a time of occurrence of the fault (for example, a time point when control device 3 determines that the fault occurs) (step S40), and returns to the processing in step S30. The restart processing includes, for example, processing for shifting switching elements 31s and 32s of all converter cells 7 in power converter 2 from the gate-blocked state to the deblocked state (for example, processing for transmitting a deblock signal to each converter cell 7), and processing for restoring an output of power converter 2 to a normal state. Since the ordinary fault is a temporary fault, control device 3 can continue the operation of power converter 2 by restarting power converter 2.

Next, when a fault does not occur in the power system in step S34 (NO in step S34), control device 3 determines whether or not it receives the overcurrent detection information from two or more converter cells 7 (step S42). In other words, step S42 is processing for determining whether or not control device 3 receives the overcurrent detection information from a plurality of converter cells 7 in step S30.

When control device 3 receives the overcurrent detection information from two or more converter cells 7 (YES in step S42), control device 3 performs the system stop processing (step S38), and ends processing. In this case, it is considered that a fault does not occur in the power system and some abnormality occurs in the plurality of converter cells 7. Since this abnormality is an abnormality that cannot be detected by control device 3, the system stop processing is performed in order to perform detailed investigation.

When control device 3 does not receive the overcurrent detection information from two or more converter cells 7 (that is, control device 3 receives the overcurrent detection information only from single converter cell 7) (NO in step S42), control device 3 determines whether or not the number of times of restart processing based on the overcurrent detection information at the present time point is more than or equal to a threshold value X (step S44). In the following description, it is assumed that the "number of times of restart processing" means the number of times of the restart processing based on the overcurrent detection information from converter cell 7. The restart processing based on the overcurrent detection information is restart processing in step S46 described later. Further, it is assumed that control device 3 counts the number of times of the restart processing every time it performs the restart processing based on the overcurrent detection information. Threshold value X is an integer equal to or more than 1, and is arbitrarily determined by a system operator.

When the number of times of the restart processing is less than threshold value X (NO in step S44), control device 3 performs the restart processing after a lapse of a prescribed time from a time of occurrence of the fault (for example, a time point when control device 3 determines that the fault occurs) (step S46), and returns to the processing in step S30. When the number of times of the restart processing is less than threshold value X, the operation of power converter 2 is continued by the restart processing, in view of the possibility that detection of an overcurrent by converter cell 7 is an erroneous detection.

When the number of times of the restart processing is more than or equal to threshold value X (YES in step S44), control device 3 performs processing for closing bypass element 51 of single converter cell 7 (hereinafter also referred to as a "converter cell 7_i" for convenience) that has transmitted the overcurrent detection information to control device 3, performs restart processing for power converter 2 (step S48), and returns to step S30. Specifically, control device 3 determines that single converter cell 7_i fails, and transmits, to converter cell 7_i, a closing signal for closing bypass element 51 to short-circuit converter cell 7_i. Then, control device 3 performs the restart processing for power converter 2, and continues the operation thereof using remaining converter cells 7.

According to the flowchart described above, control device 3 has the following functions.

When an ordinary fault occurs (for example, YES in step S36), control device 3 performs the restart processing for power converter 2 after a lapse of the prescribed time from occurrence of the ordinary fault (for example, step S40).

When a fault does not occur and control device 3 receives the overcurrent detection information from two or more converter cells 7 (for example, YES in step S42), control device 3 performs processing for stopping the operation of power converter 2 (for example, step S38).

In a case where the restart processing (for example, the restart processing in step S46) is not performed at all, when a fault does not occur in the power system and control device 3 receives the overcurrent detection information only from converter cell 7_i (for example, NO in step S42), control device 3 performs the restart processing for power converter 2 (for example, step S46).

After the restart processing (for example, step S46), control device 3 determines whether or not it further receives the overcurrent detection information from converter cell 7_i (for example, step S30), and when control device 3 does not further receive the overcurrent detection information (for example, NO in step S30), control device 3 determines that detection of an overcurrent in converter cell 7_i is an erroneous detection. In this case, the operation of power converter 2 is continued.

On the other hand, when control device 3 further receives the overcurrent detection information only from converter cell 7_i after the restart processing (for example, step S46), and the number of times of the restart processing is more than or equal to threshold value X (for example, NO in step S42 and YES in step S44), control device 3 performs the processing for closing bypass element 51 in converter cell 7_i and the restart processing for power converter 2 (step S48). It should be noted that, in a case where threshold value X is "1", when control device 3 further receives the overcurrent detection information only from converter cell 7_i (for example, NO in step S42), control device 3 may perform the processing for closing bypass element 51 in converter cell 7_i and the restart processing for power converter 2 (for example, step S48).

### <Modification>

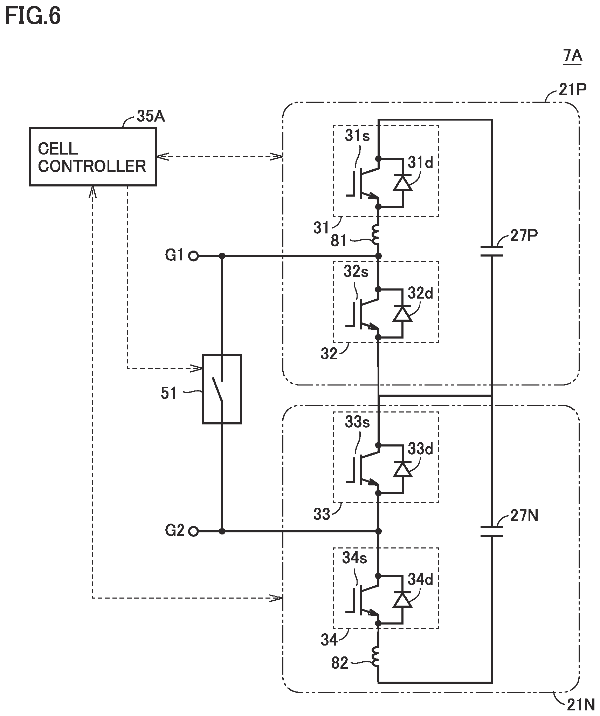

Fig. 6 is a diagram showing a converter cell according to a modification of the present embodiment. Referring to Fig. 6, a converter cell 7A includes a cell controller 35A, a switching circuit 21P and a switching circuit 21N connected in series, bypass element 51, input/output terminal G1 on the high potential side, and input/output terminal G2 on the low potential side.

Switching circuits 21P and 21N are each constituted by a half-bridge circuit. Specifically, switching circuit 21P includes semiconductor circuits 31 and 32 and a capacitor 27P. While the configuration of switching circuit 21P is the same as the configuration of switching circuit 21 in Fig. 2, a symbol "P" is added thereto for convenience, for the sake of distinction. Input/output terminal G1 is connected to a connection point between a negative electrode terminal of switching element 31s and a positive electrode terminal of switching element 32s.

Switching circuit 21N includes semiconductor circuits 33 and 34 and a capacitor 27N. Semiconductor circuit 33 includes a switching element 33s and a diode 33d. Diode 33d is an FWD connected in anti-parallel with switching element 33s. Semiconductor circuit 34 includes a switching element 34s and a diode 34d. Diode 34d is an FWD connected in anti-parallel with switching element 34s. Switching elements 33s and 34s are constituted by semiconductor switching elements similar to switching elements 31s and 32s (for example, IGBTs, MOSFETs).

Capacitor 27N is connected in parallel with a series body including semiconductor circuit 33 (for example, switching element 33s) and semiconductor circuit 34 (for example, switching element 34s). Input/output terminal G2 is connected to a connection point between a negative electrode terminal of switching element 33s and a positive electrode terminal of switching element 34s. A positive electrode terminal of capacitor 27N is connected with a positive electrode terminal of semiconductor circuit 33, and a negative electrode terminal of capacitor 27N is connected with a negative electrode terminal of semiconductor circuit 34. A negative electrode terminal of semiconductor circuit 32 and a negative electrode terminal of capacitor 27P are connected to the positive electrode terminal of semiconductor circuit 33 and the positive electrode terminal of capacitor 27N.

In converter cell 7A, since two switching circuits 21P and 21N are connected in series, a voltage applied to each of switching circuits 21P and 21N is reduced. Therefore, the configuration of converter cell 7A as described above is particularly useful when converter cell 7A is miniaturized and densified in an MMC for high-voltage application.

When an overcurrent (for example, a short-circuit current) occurs in semiconductor circuit 31, a voltage is generated in a parasitic inductance 81 on an emitter side of semiconductor circuit 31 by a self-induced electromotive force generated in a path of the short-circuit current based on a temporal change amount of the short-circuit current. Cell controller 35A detects a short-circuit current flowing to semiconductor circuit 31 (for example, switching element 31s) based on the voltage of parasitic inductance 81. For example, when the voltage of parasitic inductance 81 is more than or equal to a prescribed voltage, cell controller 35A determines that a short-circuit current (that is, an overcurrent) flowing to semiconductor circuit 31 occurs. Similarly, when a voltage of a parasitic inductance 82 on an emitter side of semiconductor circuit 34 is more than or equal to a prescribed voltage, cell controller 35A determines that a short-circuit current (that is, an overcurrent) flowing to semiconductor circuit 34 (for example, switching element 34s) occurs.

It should be noted that an overcurrent may be detected by providing current detector 41 as in the configuration of Fig. 2. For example, one current detector 41 may be provided between semiconductor circuit 31 and input/output terminal G1, and another current detector 41 may be provided between semiconductor circuit 34 and capacitor 27N.

When cell controller 35A detects that an overcurrent flows to any of switching element 31s and switching element 34s, cell controller 35A gate-blocks switching elements 31s to 34s (for example, fixes switching elements 31s to 34s to the OFF state). Cell controller 35A eliminates the overcurrent by implementing the blocking within several microseconds to several tens of microseconds before switching element 31s fails. Cell controller 35A may block switching element 31s by an operation called "soft turn-off" that performs blocking by a switching operation slower than a switching operation for normal control. This is performed to suppress a surge voltage generated across a semiconductor switching element at the time of turning-off, because a saturation current of the semiconductor switching element is larger than a current under normal control.

Cell controller 35A transmits the overcurrent detection information indicating detection of the overcurrent to control device 3. When control device 3 receives the overcurrent detection information, control device 3 instructs (for example, transmits instruction information to) each of all converter cells 7A included in power converter 2 to gate-block switching elements 31s to 34s of converter cell 7A. Cell controller 35A of each converter cell 7A gate-blocks switching elements 31s to 34s in accordance with the instruction.

In the following, processing procedures of converter cell 7A and control device 3 according to the modification will be described. A flow from when cell controller 35A of converter cell 7A detects an overcurrent to when it transmits the overcurrent detection information is the same as that in Fig. 4. Specifically, when cell controller 35A detects an overcurrent flowing to any of switching elements 31s and 34s, cell controller 35A gate-blocks switching elements 31s to 34s in converter cell 7A, and transmits the overcurrent detection information to control device 3.

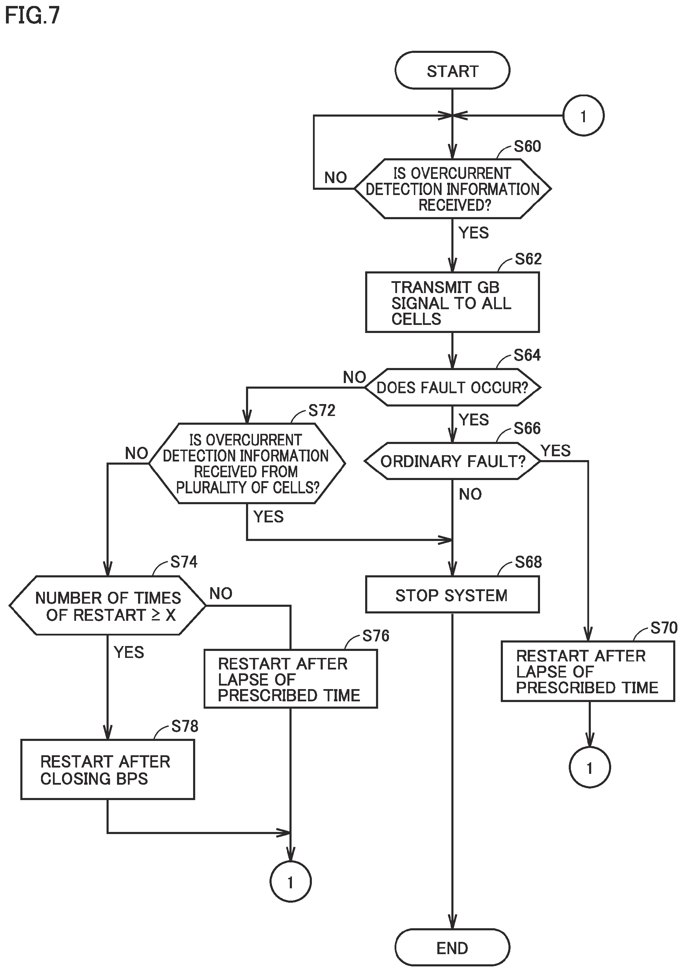

Fig. 7 is a flowchart showing an example of a processing procedure of control device 3 according to the modification of the present embodiment. Processing of control device 3 in Fig. 7 is performed by processing circuitry in control device 3.

Referring to Fig. 7, control device 3 determines whether or not it receives the overcurrent detection information from at least one converter cell 7A (step S60). When control device 3 does not receive the overcurrent detection information from any of converter cells 7A (NO in step S60), control device 3 continues the processing in step S60. When control device 3 receives the overcurrent detection information from at least one converter cell 7 (YES in step S60), control device 3 transmits, to all converter cells 7A in power converter 2, a gate block signal for instructing them to gate-block switching elements 31s to 34s (step S62).

Processings in steps S64, S66, and S68 are the same as the processings in steps S34, S36, and S38 in Fig. 5, respectively. It should be noted that system stop processing performed in step S68 includes processing for gate-blocking switching elements 31s to 34s of all converter cells 7A in power converter 2, processing for opening the breaker, and prescribed stop processing for completely stopping the operation of power converter 2.

In step S70, control device 3 performs restart processing for restarting power converter 2 after a lapse of a prescribed time from a time of occurrence of the fault. The restart processing includes, for example, processing for shifting switching elements 31s to 34s of all converter cells 7A in power converter 2 from the gate-blocked state to the deblocked state, and processing for restoring an output voltage of power converter 2 to a normal state.

Processings in steps S72, S74, and S76 are the same as the processings in steps S42, S44, and S46 in Fig. 5, respectively.

When the number of times of the restart processing is more than or equal to threshold value X (YES in step S74), control device 3 performs processing for closing bypass element 51 of single converter cell 7A (hereinafter also referred to as a "converter cell 7A_i" for convenience) that has transmitted the overcurrent detection information to control device 3, performs restart processing for power converter 2 (step S78), and returns to step S60. Specifically, control device 3 determines that single converter cell 7A_i fails, and transmits, to converter cell 7A_i, a closing signal for closing bypass element 51 to short-circuit converter cell 7A_i, and a signal for controlling switching elements 32s and 33s of converter cell 7A_i to be in the ON state.

Here, the reason why switching elements 32s and 33s are controlled to be in the ON state immediately before an operation of closing bypass element 51 is to prevent damage to bypass element 51 due to an inrush overcurrent. For example, when semiconductor circuit 31 (for example, switching element 31s) has a short-circuit abnormality, an overcurrent flows through a path R1 of capacitor 27P, semiconductor circuit 31, and semiconductor circuit 32, by setting switching element 32s to the ON state. Since energy in capacitor 27P is thereby consumed, the energy stored in capacitor 27P is sufficiently consumed at a time point when bypass element 51 is actually closed. Therefore, after bypass element 51 is closed, an overcurrent flowing through a path of capacitor 27P, semiconductor circuit 31, bypass element 51, and semiconductor circuit 33 is suppressed, and damage to bypass element 51 can be prevented.

Further, when semiconductor circuit 34 (for example, switching element 34s) has a short-circuit abnormality, an overcurrent flows through a path R2 of capacitor 27N, semiconductor circuit 33, and semiconductor circuit 34, by setting switching element 33s to the ON state. Since energy in capacitor 27N is thereby consumed, the energy stored in capacitor 27N is sufficiently consumed at a time point when bypass element 51 is actually closed. Therefore, after bypass element 51 is closed, an overcurrent flowing through a path of capacitor 27N, semiconductor circuit 32, bypass element 51, and semiconductor circuit 34 is suppressed, and damage to bypass element 51 can be prevented.

### <Advantages>

According to the present embodiment, by achieving coordination between the control device as a higher-level device and the cell controller of each converter cell, it is possible to appropriately protect each converter cell, and appropriately determine what kind of processing (for example, the system stop processing, the restart processing for power converter 2, the processing for closing bypass element 51) should be performed.

### Other Embodiments

In the embodiment described above, cell controller 35 may count the number of times of detection of an overcurrent when the overcurrent is detected in converter cell 7, and perform processing for closing bypass element 51 in converter cell 7 when the number of times of detection is more than or equal to threshold value X. For example, it is assumed that threshold value X is set to "2". When cell controller 35 detects a first overcurrent in converter cell 7, cell controller 35 transmits an overcurrent detection signal to control device 3, and control device 3 performs the restart processing. Thereafter, when cell controller 35 detects a second overcurrent, cell controller 35 performs closing of bypass element 51. The number in a counter as the number of times of detection may be resettable when power converter 2 is started, or may be resettable by an instruction from a higher-level device (for example, control device 3) or by a timer.

The configuration exemplified as the embodiment described above is an exemplary configuration of the present disclosure, and can be combined with another known technique, or can be configured as being modified, for example, partially omitted, without departing from the gist of the present disclosure. Further, in the embodiment described above, the processing and the configuration described in another embodiment may be adopted and performed as appropriate.

It should be understood that the embodiment disclosed herein is illustrative and non-restrictive in every respect. The scope of the present disclosure is defined by the scope of the claims, rather than the description above, and is intended to include any modifications within the scope and meaning equivalent to the scope of the claims.

### REFERENCE SIGNS LIST

1: power conversion device; 2: power converter; 3: control device; 4u, 4v, 4w: leg circuit; 5: upper arm; 6: lower arm; 7, 7A: converter cell; 8A, 8B: reactor; 9A, 9B: arm current detector; 10: AC voltage detector; 11A, 11B: DC voltage detector; 12: AC circuit; 13: interconnection transformer; 14: DC circuit; 16: AC current detector; 21, 21N, 21P: switching circuit; 27, 27N, 27P: capacitor; 31 to 34: semiconductor circuits; 31d to 34d: diodes; 31s to 34s: switching elements; 35, 35A: cell controller; 41: current detector; 45: voltage detection unit; 51: bypass element; 70: input converter; 71: sample hold circuit; 72: multiplexer; 73: A/D converter; 74: CPU; 75: RAM; 76: ROM; 77: input/output interface; 78: auxiliary storage device; 79: bus; 81, 82: parasitic inductance; 1000: power conversion system.

## Claims

1. A power conversion device comprising:
a power converter including a plurality of converter cells connected in series; and
a control device to control the power converter, wherein
each of the plurality of converter cells includes
a cell controller,
a first input/output terminal and a second input/output terminal,
a plurality of switching elements, and
an energy storage element connected to the first input/output terminal and the second input/output terminal via the plurality of switching elements,
when the cell controller detects an overcurrent flowing to any of the plurality of switching elements, the cell controller gate-blocks the plurality of switching elements, and transmits detection information indicating detection of the overcurrent to the control device, and
when the control device receives the detection information, the control device instructs each of the plurality of converter cells to gate-block the plurality of switching elements of the converter cell.

2. The power conversion device according to claim 1, wherein
when the control device receives the detection information, the control device determines whether or not a fault occurs in a power system, and
when the fault does not occur and the control device receives the detection information only from one converter cell among the plurality of converter cells, the control device performs restart processing for the power converter.

3. The power conversion device according to claim 2, wherein, when the fault does not occur and the control device receives the detection information from two or more converter cells among the plurality of converter cells, the control device performs processing for stopping operation of the power converter.

4. The power conversion device according to claim 2 or 3, wherein
the control device determines whether or not the control device further receives the detection information from the one converter cell after the restart processing, and
when the control device does not further receive the detection information, the control device determines that detection of the overcurrent in the one converter cell is an erroneous detection.

5. The power conversion device according to claim 4, wherein
each of the plurality of converter cells further includes a bypass element connected between the first input/output terminal and the second input/output terminal, and
when the control device further receives the detection information only from the one converter cell and a number of times of the restart processing is more than or equal to a threshold value, the control device performs processing for closing the bypass element in the one converter cell.

6. The power conversion device according to claim 4, wherein
each of the plurality of converter cells further includes a bypass element connected between the first input/output terminal and the second input/output terminal, and
the cell controller counts a number of times the overcurrent is detected, and
when the number of times the overcurrent is detected is more than or equal to a threshold value, the cell controller performs processing for closing the bypass element in the converter cell to which the cell controller corresponds.

7. The power conversion device according to any one of claims 2 to 6, wherein, when the fault that occurs is an ordinary fault, the control device performs the restart processing for the power converter after a lapse of a prescribed time from occurrence of the ordinary fault.

8. A power conversion device comprising:
a power converter including a plurality of converter cells connected in series; and
a control device to control the power converter, wherein
each of the plurality of converter cells includes
a cell controller,
a first switching circuit and a second switching circuit connected in series, and
a first input/output terminal and a second input/output terminal,
the first switching circuit includes a first switching element, a second switching element, and a first energy storage element connected in parallel with a series body including the first switching element and the second switching element,
the first input/output terminal is connected to a connection point between a negative electrode terminal of the first switching element and a positive electrode terminal of the second switching element,
the second switching circuit includes a third switching element, a fourth switching element, and a second energy storage element connected in parallel with a series body including the third switching element and the fourth switching element,
the second input/output terminal is connected to a connection point between a negative electrode terminal of the third switching element and a positive electrode terminal of the fourth switching element,
when the cell controller detects an overcurrent flowing to any of the first switching element and the fourth switching element, the cell controller gate-blocks the first to fourth switching elements, and transmits detection information indicating detection of the overcurrent to the control device, and
when the control device receives the detection information, the control device instructs each of the plurality of converter cells to gate-block the first to fourth switching elements of the converter cell.
